# EUROPÄISCHE PATENTSCHRIFT

(11) **EP 3 224 558 B1**
(45) Veröffentlichungstag und Bekanntmachung des Hinweises auf die Patenterteilung: **05.08.2020**
(21) Anmeldenummer: 15787466.0
(22) Anmeldetag: 23.10.2015
(51) Int. Cl.: F25D 23/06

(54) **VERFAHREN ZUR HERSTELLUNG EINES VAKUUMDÄMMKÖRPERS**
METHOD FOR PRODUCING A VACUUM INSULATION BODY
PROCÉDÉ DE FABRICATION D'UN CORPS D'ISOLATION SOUS VIDE

(30) Priorität: 27.11.2014 DE 102014017597; 19.12.2014 DE 102014019234; 24.06.2015 DE 102015008157
(43) Veröffentlichungstag der Anmeldung: 04.10.2017
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: HIEMEYER, Jochen, 97753 Karlstadt (DE); FREITAG, Michael, 97082 Würzburg (DE); KERSTNER, Martin, 97072 Würzburg (DE)
(74) Vertreter: Herrmann, Uwe
(86) Internationale Anmeldenummer: PCT/EP2015/002109
(87) Internationale Veröffentlichungsnummer: WO 2016/082907

(56) Entgegenhaltungen:
- DE-A1-102010 040 346
- DE-A1-102010 040 557
- Sean Lahousse: "Vacuum insulation using perlite powder sealed in plastic and glass", , 24. März 1993 (1993-03-24), XP055240992, Gefunden im Internet: URL:http://dspace.mit.edu/bitstream/handle /1721.1/72769/29813396-MIT.pdf?sequence=2 [gefunden am 2016-01-13]

## Beschreibung

Die vorliegende Erfindung betrifft ein Verfahren zur Herstellung eines Vakuumdämmkörpers umfassend eine vakuumdichten Umhüllung, die einen evakuierten Bereich umgibt. In dem evakuierten Bereich kann ein Kernmaterial, wie beispielsweise Perlit angeordnet werden.

Ein gattungsgemäßer Vakuumdämmkörper ist beispielsweise aus der DE 10 2013 005 585 A1 bekannt. Der aus dieser Patentanmeldung bekannte Vakuumdämmkörper besteht aus einer diffusionsdichten, d.h. vakuumdichten Umhüllung, deren Oberfläche größer ist als die Oberfläche des Hüllkörpers, wie beispielsweise eines Innenbehälters, an dem die Umhüllung anliegt. So ist es beispielsweise möglich, vorspringende oder zurückversetzte Konturen des Hüllkörpers in der Umhüllung abbilden zu können.

Bei der Herstellung eines Vakuumdämmkörpers wird vorzugsweise eine Schüttung in die Umhüllung eingebracht. Um diese Einbringung der Schüttung sinnvoll durchführen zu können, ist in der Umhüllung eine Öffnung vorgesehen, die im Nachgang zur Befüllung vakuumdicht verschlossen werden muss.

Diese vakuumdichte Versiegelung ist insofern problematisch, als dass die Öffnung der Umhüllung keine definierte Fläche zum Anbringen bzw. Auflegen einer die Öffnung überdeckenden Abdeckfolie aufweist.

Ein aus dem Stand der Technik bekanntes Verfahren zur Herstellung eines Vakuumdämmkörpers wird beispielsweise in der DE 10 2010 040 557 A1 offenbart.

Der vorliegenden Erfindung liegt daher die Aufgabe zugrunde, ein Verfahren zur Herstellung eines Vakuumdämmkörpers der eingangs genannten Art dahingehend weiterzubilden, dass das Verschließen bzw. die Siegelung der Öffnung der Umhüllung prozesssicher durchgeführt werden kann.

Diese Aufgabe wird durch ein Verfahren mit den Merkmalen des Anspruchs 1 gelöst. Danach ist vorgesehen, dass die Umhüllung des Vakuumdämmkörpers eine durch eine vakuumdichte Abdeckfolie überdeckte Öffnung, die zur Befüllung der Umhüllung mit dem Kernmaterial dient, aufweist, wobei die Umhüllung in dem zu der Öffnung ragenden Randbereich zunächst nach innen gefaltet wird, sodass die Öffnung verkleinert ist und anschließend wieder nach außen gefaltet wird, wobei der nach außen gefaltete Bereich sowie ein Bereich der Abdeckfolie sodann miteinander umlaufend vakuumdicht verbunden werden. Durch die spezielle Faltung des Randbereichs der Öffnung der Umhüllung wird eine Siegelfläche der Umhüllung geschaffen, die prozesssicher und vakuumdicht mit der Abdeckfolie verbunden bzw. versiegelt werden kann.

Der Randbereich der Umhüllung liegt dabei so auf einer Hilfsstruktur auf, dass er eine ebene Fläche bildet, die die Gegenfläche für die Abdeckfolie bildet, mit der die Umhüllung vakuumdicht versiegelt wird.

Der nach außen gefaltete Bereich bildet eine ebene Fläche bilden, die an bzw. oben auf einer Hilfsstruktur anliegt. Der nach außen gefaltete Bereich bzw. die ebene Fläche bildet die Außenfläche der Umhüllung im Bereich der Öffnung, auf die dann die Abdeckfolie aufgebracht werden kann.

Durch die Hilfsstruktur in der übergroßen Folienhülle bzw. Umhüllung wird ein Abschluss der Öffnung des Vakuumdämmkörpers bzw. von dessen Umhüllung gebildet, die eine ebene Siegelmöglichkeit für ein weiteres ebenes Folienstück in Form der Abdeckfolie bildet.

Um eine Verschmutzung der späteren Siegelnaht zwischen der Umhüllung und der Abdeckfolie möglichst zu vermeiden, kann es sinnvoll sein, die Umhüllung nur bis unterhalb der Hilfsstruktur bzw. bis unterhalb des nach außen gefalteten Randbereiches der Umhüllung mit dem Kernmaterial zu befüllen. Auch besteht eine bevorzugte Ausgestaltung der Erfindung darin, die Siegelnaht während des Befüllvorgangs mit dem Kernmaterial mit geeigneten Mitteln, wie beispielsweise einer Abdeckung oder einer sinnvoll positionierten Absaugung vor Staub zu schützen.

Die Hilfskontur kann nach Abschluss des Siegelvorgangs entfernt werden oder auch am Vakuumdämmkörper verbleiben. Wird sie entfernt, so liegt in der endgültigen Formgebung nach Anlegen des Vakuums im Inneren des Vakuumdämmkörpers einzig eine Mehrfachlage der Folien vor.

Wie oben ausgeführt, sieht eine Ausgestaltung der Erfindung vor, dass z. B. bei einer rechteckigen Öffnung der Folienhülle bzw. Umhüllung aus einem Folienschlauch durch verjüngende Faltung zunächst eine Verkleinerung der Schlauchöffnung vorgenommen wird, die dann wieder auf den vollen Schlauchquerschnitt aufgefaltet wird. Im Eckbereich der Folienhülle bzw. Umhüllung wird dabei wahlweise eine definierte Folienfaltung vorgenommen oder eine sich ergebende Faltenbildung der Folie in Kauf genommen.

In einer bevorzugten Ausgestaltung der Erfindung ist vorgesehen, dass die Umhüllung und/oder die Abdeckfolie teilweise oder vollständig als Hochbarrierefolien ausgebildet sind.

Denkbar ist es weiterhin, dass die Umhüllung und/oder die Abdeckfolie teilweise oder vollständig aus einer Aluminiumverbundfolie bestehen.

In einer weiteren Ausgestaltung der Erfindung ist vorgesehen, dass die vakuumdichte Umhüllung als Beutel vorliegt. Der Beutel kann im Querschnitt rund oder eckig ausgebildet sein.

Dieser Beutel kann einseitig offen sein, wobei die offene Seite die Öffnung zur Befüllung mit dem Kernmaterial darstellt.

Weiterhin ist es denkbar, dass die Oberfläche der Umhüllung größer ist als die Oberfläche eines Hüllkörpers oder eines Hüllkörperabschnittes, an dem die Umhüllung anliegt. Dies ermöglicht es, die Konturen des Hüllkörpers entsprechend an der Umhüllung abzubilden.

Wie oben ausgeführt, ist erfindungsgemäß vorgesehen, dass der nach außen gefaltete Bereich der Umhüllung eine ebene, vorzugsweise horizontale Oberfläche aufweist und diese ebene Oberfläche bildet eine der beiden Siegelflächen zum vakuumdichten Verschließen der Öffnung. Die andere der Flächen wird durch einen Abschnitt der Abdeckfolie gebildet.

In einer weiteren Ausgestaltung der Erfindung ist vorgesehen, dass die Öffnung der Umhüllung, durch die das Kernmaterial eingefüllt wird, in einer Hauptfläche des Vakuumdämmkörpers angeordnet ist. Unter einer Hauptfläche wird im Rahmen der Erfindung eine komplette Seite des Vakuumdämmkörpers verstanden. Vorzugsweise handelt es sich bei der kompletten Seite um eine der beiden größten Seiten bzw. Flächen des Vakuumdämmkörpers. Bei einem schrankartigen Kühl- bzw. Gefriergerät kann es sich beispielsweise um den Bereich der Geräterückwand handeln, d.h. um den Abschnitt des Vakuumdämmkörpers, der zur Rückseite des Gerätes gewandt ist. Im Falle einer Truhe kann es sich um den Truhenboden handeln, d.h. um den Bereich des Vakuumdämmkörpers, der zum Boden der Kühl- bzw. Gefriertruhe gerichtet ist.

Handelt es sich um ein Verschlusselement, wie beispielsweise um eine Tür oder einen Deckel eines Kühl- und/oder Gefriergerätes, bietet sich beispielsweise dessen Vorder- bzw. Oberseite an. Somit ist in diesem Fall die Befüllöffnung durch die Seite der Umhüllung gebildet, die zu der Vorder- bzw. Oberseite des Verschlusselementes hinweist.

Wie oben ausgeführt, wird diese Öffnung nach der Befüllung mit einem Kernmaterial mit einem Folienpatch, d.h. durch eine Abdeckfolie sicher verschlossen.

Vorzugsweise ist vorgesehen, dass alle Schweißungen, die die beiden Folienteile verbinden, d.h. die Folie des Vakuumdämmkörper und der Abdeckfolie in einer Ebene liegen.

Die vorliegende Erfindung betrifft des Weiteren ein Verfahren zur Herstellung eines Kühl- und oder Gefriergeräts mit einem gekühlten Innenraum und mit einer den gekühlten Innenraum wenigstens bereichsweise gebenden Wandung, wobei sich zwischen dem gekühlten Innenraum und der Wandung ein Vakuumdämmkörper befindet. Dieser Vakuumdämmkörper wird anhand eines erfindungsgemäßen Verfahrens hergestellt. Er kann sich beispielsweise zwischen einer Außenwandung des Korpus und dem Innenbehälter oder auch zwischen der Außenseite und der Innenseite der Tür oder eines sonstigen Verschlusselementes, wie beispielsweise eines Deckels des Gerätes befinden.

Es wird darauf hingewiesen, dass die Begriffe "ein" oder "eine" keine Beschränkung auf genau ein entsprechendes Bauteil darstellen, sondern auch eine Mehrzahl von diesen umfasst. So können beispielsweise mehrere Öffnungen in der Umhüllung, mehrere Hilfskonturen, mehrere Abdeckfolien, mehrere gekühlte Innenräume oder genau eines der genannten Elemente vorhanden sein. Dies gilt für sämtliche anderen Komponenten des Vakuumdämmkörpers bzw. des Kühl- und oder Gefriergerätes entsprechend.

In einer Ausführungsform ist vorgesehen, dass es sich bei dem erfindungsgemäß hergestellten Kühl- und/oder Gefriergerät um ein Haushaltsgerät bzw. ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner ist auch die Herstellung von Kühl- und/oder Gefriertruhen von der Erfindung umfasst. Die entsprechenden Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem erfindungsgemäß hergestellten Gerät um ein Einbaugerät oder auch um ein Standgerät handeln.

Vorzugsweise ist das erfindungsgemäß hergestellte Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist denkbar, dass das erfindungsgemäß hergestellteGerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Betrieb mit Gleichspannung kann insbesondere dann zur Anwendung kommen, wenn das Gerät eine thermoelektrische Wärmepumpe zum Temperieren des Innenraums aufweist.

Insbesondere kann vorgesehen sein, dass das erfindungsgemäß hergestellteKühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich bei dem erfindungsgemäß hergestellten Gerät um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf. Die Außenabmessungen des Behälters bzw. Gerätes liegen vorzugsweise im Bereich bis 1 m hinsichtlich der Höhe, der Breite und der Tiefe.

Im Bezug auf das erfindungsgemäß hergestellte Gerät stellt der erfindungsgemäße Vakuumdämmkörper vorzugsweise ein Vollvakuumsystem dar, welches im Raum zwischen der den Innenraum des Gerätes begrenzenden Innenwand und der Außenhaut des Gerätes angeordnet ist. Unter einem Vollvakuumsystem ist eine Wärmedämmung zu verstehen, die ausschließlich oder überwiegend aus einem evakuierten Bereich besteht, der mit einem Kernmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Geräts und der Außenhaut des Gerätes als Wärmedämmung ausschließlich ein solcher Folienkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Gerätes sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus und/oder zwischen der Innenseite und der Außenseite des Verschlusselementes, wie z.B. einer Tür, Klappe, Deckel oder dergleichen erstrecken.

Im Rahmen eines erfindungsgemäßen Verfahrens kann weiterhin vorgesehen sein, dass die Umhüllung mit dem Kernmaterial gefüllt und anschließend vakuumdicht mit der Abdeckfolie versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung oder die Abdeckfolie eingearbeiteten Schnittstelle, beispielsweise eines Evakuier-stutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, den Dämmkörper in eine Vakuumkammer einzubringen. Insofern kann in einer Ausführungsform während der Herstellung des Vakuumdämmkörpers auf eine Vakuumkammer verzichtet werden.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10⁻⁵ mbar * l / s *m² und besonders bevorzugt < 10⁻⁶ mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10⁻² mbar * l / s * m² und besonders bevorzugt im Bereich von < 10⁻³ mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Weitere Einzelheiten und Vorteile der Erfindung werden anhand eines in der Zeichnung dargestellten Ausführungsbeispiels näher erläutert.

Es zeigen:
- Figur 1:: eine schematische Ansicht eines an einen Hüllkörper angrenzenden Vakuumdämmkörpers mit Hilfskontur und
- Figur 2:: eine schematische Ansicht der Anordnung gemäß Figur 1 nach dem Schweißvorgang und nach dem Entfernen der Hilfskontur.

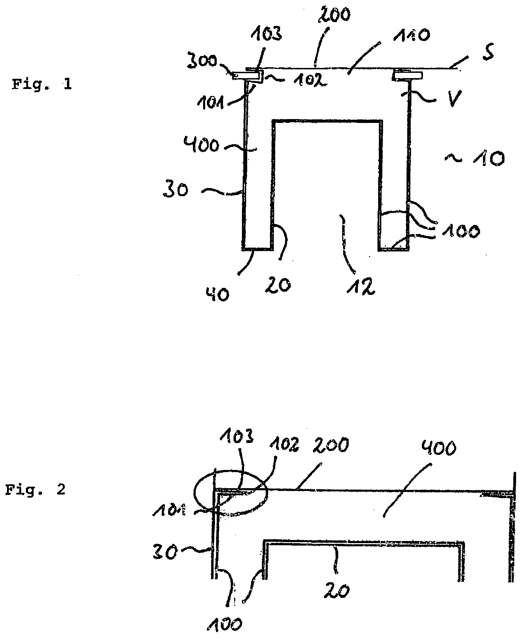

Figur 1 zeigt mit dem Bezugszeichen 10 ein Kühl- und oder Gefriergerät, beispielsweise eine Kühl- und Gefriertruhe, die einen gekühlten Innenraum 12 aufweist. In der Darstellung gemäß Figur 1 ist die Kühl- bzw. Gefriertruhe gestürzt dargestellt, sodass die offene Seite des Innenbehälters unten liegt.

Der gekühlte Innenraum 12 wird durch einen Innenbehälter 20 begrenzt, die Außenseite der Truhe durch einen Außenmantel 30. Zwischen beiden Elementen befindet sich ein Abdeckrahmen 40, der den Innenbehälter 20 und den Außenmantel 30 miteinander verbindet. Diese Elemente bilden zusammen einen Hüllkörper, dessen Innenraum zumindest teilweise von einem Vakuumdämmkörper gefüllt ist.

Der Vakuumdämmkörper umfasst eine Hochbarrierefolie 100, die auf der Innenseite des Innenbehälters, des Abdeckrahmens sowie des Außenmantels verläuft, und die eine gemäß Figur 1 oben liegende Befüllöffnung 110 aufweist.

Die Umhüllung bzw. der Vakuumdämmkörper ist als dreidimensionale Struktur ausgebildet.

Im Bereich der Befüllöffnung 110 ist die Hochbarrierefolie mit dem Abschnitt 101 nach innen gefaltet, sodass sich eine Verjüngung der Befüllöffnung ergibt. Daran schließt sich ein Verbindungsstück 102 an, das nach einer erneuten Abwinklung den nach außen gefalteten Bereich 103 mit dem Bereich 101 verbindet.

Der Bereich 103 bildet den nach außen gefalteten Bereich der Umhüllung, die als Foliensack ausgebildet sein kann. Insgesamt wird der Randbereich der Umhüllung somit durch eine im Schnitt U-förmige Struktur gebildet, die aus den Abschnitten 101, 102 und 103 besteht, wobei der Abschnitt 103 den Endabschnitt der Umhüllung bildet und eben und vorzugsweise horizontal ausgebildet ist.

Das Bezugszeichen 200 kennzeichnet ein Folienpatch, d.h. eine Abdeckfolie, die ebenfalls eben ausgebildet ist und die so dimensioniert ist, dass sie die Öffnung 110 vollständig überdeckt. Mit ihrem Randbereich liegt die Abdeckfolie 200 auf den nach außen gefalteten Abschnitten 103 auf, und zwar umlaufend, sodass nach dem Versiegeln ein vakuumdicht abgeschlossener Bereich innerhalb des Vakuumdämmkörpers vorliegt.

Wie dies aus Figur 1 hervorgeht, umschließt der U-förmige Rand bzw. Endabschnitt der Umhüllung eine Hilfsstruktur 300, wobei sich die genannte U-förmige Struktur des Endbereiches der Umhüllung 100 ergibt.

Somit ist es möglich, dass alle Schweißungen, die die beiden Folien verbinden, d.h. die Umhüllung 100 einerseits und die Abdeckfolie 200 andererseits, in einer Ebene liegen. Dadurch ist eine zuverlässige und prozesssichere Herstellung der Siegelnaht zwischen der Umhüllung und der Abdeckung, die beide als Hochbarrierefolie ausgeführt sein können, gewährleistet.

Die Hilfskontur 300 dient somit gleichsam als Gegenschweißrahmen beim Siegelvorgang.

Das Bezugszeichen S kennzeichnet die gemeinsame Siegelebene zwischen der Umhüllung und der Abdeckung.

Das Bezugszeichen 400 kennzeichnet die Schüttung innerhalb des Vakuumdämmkörpers, die beispielsweise als Perlit ausgeführt sein kann.

In dem hier dargestellten Ausführungsbeispiel handelt es sich bei der Befüllöffnung um die gesamte (gemäß Figur 1 oben liegende) Fläche des Vakuumdämmkörpers, die zur Unterseite der Kühl- bzw. Gefriertruhe gewandt ist. Somit handelt es sich um eine Hauptfläche des Vakuumdämmkörpers, durch die die Pulverschüttung in den Dämmkörper entleert wird, wodurch sich eine besonders einfache Befüllung ergibt. Grundsätzlich sind auch andere Flächen des Vakuumdämmkörpers als Befüllöffnung geeignet, wie beispielsweise Seitenflächen oder rückseitig angeordnete Flächen.

Wird die Hilfskontur entfernt und Vakuum angelegt, ergibt sich der in Figur 2 dargestellte Zustand. Hieraus ist erkennbar, dass die Folienfaltung der Umhüllung im Siegelbereich aus einem nach innen gefalteten Bereich 101, dem Verbindungsabschnitt 102 und dem nach außen gefalteten Bereich 103 besteht, wobei letzterer über die Siegelnaht bzw. mit der Abdeckfolie verbunden ist. Wie aus Figur 2 ersichtlich, ist das nicht ebene Folienteil unterhalb der Schweißnaht somit zurückgefaltet und diese Rückfaltung liegt an der Schweißnaht an.

## Patentansprüche

1. Verfahren zur Herstellung eines Vakuumdämmkörpers umfassend eine vakuumdichte Umhüllung (100), die einen evakuierten Bereich umgibt, in dem ein Kernmaterial (400) angeordnet ist, wobei die Umhüllung (100) eine durch eine vakuumdichte Abdeckfolie (200) überdeckte Öffnung (110) zur Befüllung der Umhüllung (100) mit dem Kernmaterial (400) aufweist, und wobei die Umhüllung (100) in dem zu der Öffnung (110) ragenden Randbereich nach innen gefaltet ist, so dass die Öffnung (110) verkleinert ist,
**dadurch gekennzeichnet,**
**dass** die Umhüllung (100) zunächst in dem zu der Öffnung (110) ragenden Randbereich nach innen und anschließend um eine Hilfsstruktur (300) wieder nach außen gefaltet wird, wobei sich eine U-förmige Struktur eines Endbereichs der Umhüllung ergibt und der nach außen gefaltete Bereich (103) der Umhüllung (100) eine ebene Oberfläche aufweist, die eine Siegelfläche zum vakuumdichten Verschließen der Öffnung bildet, und wobei dieser Bereich (103) und ein Bereich der Abdeckfolie (200) sodann umlaufend vakuumdicht miteinander verbunden werden.

2. Verfahren nach Anspruch 1, **dadurch gekennzeichnet, dass** die Umhüllung (100) und/oder die Abdeckfolie (200) als Hochbarrierefolie ausgebildet ist.

3. Verfahren nach einem der vorhergehenden Ansprüche, **dadurch gekennzeichnet, dass** die Umhüllung (100) und/oder die Abdeckfolie (200) aus einer Aluminiumverbundfolie besteht.

4. Verfahren nach einem der vorhergehenden Ansprüche, **dadurch gekennzeichnet, dass** die Umhüllung (100) als Beutel vorliegt.

5. Verfahren nach einem der vorhergehenden Ansprüche, **dadurch gekennzeichnet, dass** die Öffnung (110) der Umhüllung (100) in einer Hauptfläche des Vakuumdämmkörpers angeordnet ist.

6. Verfahren zur Herstellung eines Kühl- und/oder Gefriergeräts (10) mit einem Innenraum (12) und einer den Innenraum (20) wenigstens bereichsweise umgebenden Wandung, wobei sich zwischen dem Innenraum und der Wandung ein Vakuumdämmkörper befindet, wobei der Vakuumdämmkörper anhand eines Verfahrens nach einem der vorhergehenden Ansprüche hergestellt wird.

## Claims

1. Method for manufacturing a vacuum insulation body comprising a vacuum-tight casing (100) which surrounds an evacuated region, in which a core material (400) is arranged, wherein the casing (100) includes an opening (110) for filling the casing (100) with the core material (400) which is covered by a vacuum-tight cover film (200), and wherein the casing (100) is folded inwards in the edge region protruding towards the opening (110), so that the opening (110) is reduced in size,
**characterized in that**
the casing (100) first is folded inwards in the edge region protruding towards the opening (110), and subsequently again is folded outwards, about an auxiliary structure (300), wherein a U-shaped structure of an end region of the casing results and the region (103) of the casing (100) folded outwards and the region (103) of the casing (100) folded to the outside has a flat surface, which forms a sealing surface for the vacuum-tight closing of the opening, and wherein this region (103) and a region of the cover film (200) are then vacuum-tightly connected with each other.

2. Method according to claim 1, **characterized in that** the casing (100) and/or the cover film (200) are formed as high-barrier film.

3. Method according to any of the preceding claims, **characterized in that** the casing (100) and/or the cover film (200) partly or completely consists of an aluminum compound foil.

4. Method according to any one of the preceding claims, **characterized in that** the casing (100) is present as a bag.

5. Method according to any one of the preceding claims, **characterized in that** the opening (110) of the casing (100) is arranged in a main surface of the vacuum insulation body.

6. Method for manufacturing a refrigerator and/or freezer (10) with an interior space (12) and a wall at least partly surrounding the interior space, wherein a vacuum insulation body is located between the interior space and the wall, wherein the vacuum insulation body is manufactured using a method according to any one of the preceding claims.

## Revendications

1. Procédé de fabrication d'un corps d'isolation sous vide comprenant une enveloppe (100) étanche au vide, qui entoure une zone vide d'air, dans laquelle est disposé un matériau central (400), l'enveloppe (100) comportant une ouverture (110) qui est recouverte par un film de recouvrement (200) étanche au vide et qui permet de remplir l'enveloppe (100) du matériau central (400), et l'enveloppe (100) étant pliée vers l'intérieur dans la zone de bord faisant saillie vers l'ouverture (110), de telle sorte que l'ouverture (110) est réduite,
**caractérisé en ce que**
l'enveloppe (100) est pliée d'abord vers l'intérieur dans la zone de bord faisant saillie vers l'ouverture (110) puis de nouveau vers l'extérieur autour d'une structure auxiliaire (300), une structure en forme de U d'une zone d'extrémité de l'enveloppe étant obtenue et la zone (103) pliée vers l'extérieur de l'enveloppe (100) comportant une surface plane, qui forme une surface de scellement pour la fermeture étanche au vide de l'ouverture, et cette zone (103) et une zone du film de recouvrement (200) étant ensuite reliées l'une à l'autre sur leur périphérie de manière étanche au vide.

2. Procédé selon la revendication 1, **caractérisé en ce que** l'enveloppe (100) et/ou le film de recouvrement (200) est réalisé(e) sous la forme d'un film haute barrière.

3. Procédé selon l'une des revendications précédentes, **caractérisé en ce que** l'enveloppe (100) et/ou le film de recouvrement (200) est constitué(e) d'un film composite d'aluminium.

4. Procédé selon l'une des revendications précédentes, **caractérisé en ce que** l'enveloppe (100) se présente sous la forme d'un sachet.

5. Procédé selon l'une des revendications précédentes, **caractérisé en ce que** l'ouverture (110) de l'enveloppe (100) est disposée dans une surface principale du corps d'isolation sous vide.

6. Procédé de fabrication d'un appareil de réfrigération et/ou de congélation (10) comprenant un espace intérieur (12) et une paroi entourant l'espace intérieur (20) au moins par endroits, un corps d'isolation sous vide se trouvant entre l'espace intérieur et la paroi, le corps d'isolation sous vide étant fabriqué d'après un procédé selon l'une des revendications précédentes.
